# EUROPEAN PATENT APPLICATION

(11) **EP 4 678 823 A1**
(43) Date of publication of application: **14.01.2026**
(21) Application number: 24784939.1
(22) Date of filing: 03.04.2024
(51) Int. Cl.: E02D 7/20

(54) **PRESS-IN METHOD, PRESS-IN SYSTEM, AND PROGRAM**

(30) Priority: 06.04.2023 JP 2023062081
(71) Applicant: Giken Ltd., Kochi-shi, Kochi 781-5195 (JP)
(72) Inventor: YAO, Tomoya, Kochi-shi, Kochi 781-5195 (JP)
(74) Representative: Arnold & Siedsma
(86) International application number: PCT/JP2024/013798
(87) International publication number: WO 2024/210155

(57) **Abstract**

A press-in method includes a gripping step, a position measurement step of measuring a position of a pile in an objective coordinate system by a measurement management device disposed apart from a press-in machine, a command generation step of generating a command related to an operation of the press-in machine for moving the pile to a target position by using first position information of the pile in the objective coordinate system measured in the position measurement step and second position information on a position of the chuck in a subjective coordinate system based on an advancing direction of a saddle of the press-in machine, a positioning step of moving the pile to the target position, and a press-in step of pressing the pile into a ground.

## Description

### TECHNICAL FIELD

The present disclosure relates to a press-in method, a press-in system, and a program.

Priority is claimed on Japanese Patent Application No. 2023-062081, filed April 6, 2023, the content of which is incorporated herein by reference.

### BACKGROUND ART

In the related art, automation in press-in construction of a pile has progressed. For example, Patent Document 1 discloses a control method for automatically moving (self-propelling) a press-in machine when, after press-in of a first pile is completed, a second pile is pressed in. More specifically, the press-in machine in Patent Document 1 includes a saddle, a plurality of clamps that are provided below the saddle and hold existing piles, a slide frame that is movable back and forth with respect to the saddle, a mast that is turnable with respect to the slide frame, and a chuck that is attached to the mast and grips a pile. The chuck gripping the pile moves up and down, and thus the pile is pressed into the ground. In the control method of Patent Document 1, the movement amounts of the clamp and the mast are automatically calculated, and the control is performed based on the movement amounts, thereby realizing the self-propelling.

### Citation List

### Patent Document

Patent Document 1: Japanese Unexamined Patent Application, First Publication No. 2020-84670

### SUMMARY OF INVENTION

### Technical Problem

When performing the press-in construction of a pile, it is necessary to move the pile to a target position. In the related art, automation of moving the pile to the target position has not been realized.

The present disclosure has been made in consideration of such circumstances, and an object of the present disclosure is to provide a press-in method, a press-in system, and a program that are capable of realizing automation of moving a pile to a target position.

### Solution to Problem

In order to solve the above-described problem, a press-in method according to aspect 1 of the present disclosure is a press-in method using a press-in machine including a chuck configured to grip a pile, a saddle to which a plurality of clamps configured to hold an existing pile to obtain a reaction force from the existing pile are attached, and a turnable mast configured to move back and forth with respect to the saddle and supporting the chuck, the press-in method including: a gripping step of gripping the pile by the chuck; a position measurement step of measuring a position of the pile gripped by the chuck in an objective coordinate system by a measurement management device disposed apart from the press-in machine; a communication step of causing the measurement management device and the press-in machine to communicate with each other; a command generation step of generating a command related to an operation of the press-in machine for moving the pile to a target position by using first position information of the pile in the objective coordinate system measured in the position measurement step and second position information on a position of the chuck in a subjective coordinate system that is based on an advancing direction of the saddle; a positioning step of causing the press-in machine to operate based on the command to move the pile gripped by the chuck to the target position; and a press-in step of pressing the pile into a ground at a position of the pile after the positioning step, in which in the communication step, communication of at least the first position information is performed, and an origin of the subjective coordinate system is a turning central axis of the mast at the time the mast is located farthest backward with respect to the saddle.

Aspect 2 of the present disclosure is that in the press-in method according to aspect 1, in the communication step, the measurement management device transmits the first position information measured in the position measurement step to the press-in machine, and in the command generation step, a control unit of the press-in machine generates the command by using the first position information and the second position information.

Aspect 3 of the present disclosure is that the press-in method according to aspect 1 or 2 further includes: an inclination measurement step of measuring an inclination of the pile gripped by the chuck with respect to a management angle by the measurement management device; and an inclination correction step of correcting the inclination of the pile by using inclination information of the pile measured in the inclination measurement step.

Aspect 4 of the present disclosure is that the press-in method according to any one of aspects 1 to 3 further includes: a top end height measurement step of measuring a top end height of the pile gripped by the chuck by the measurement management device, in which in the press-in step, the pile is pressed into the ground to a predetermined depth by using information on the top end height measured in the top end height measurement step.

Aspect 5 of the present disclosure is that in the press-in method according to aspect 3, in the position measurement step, the measurement management device measures positions of two points in a lower portion of the pile, and in the inclination measurement step, the measurement management device measures the positions of the two points in the lower portion of the pile and positions of two points in an upper portion of the pile.

Aspect 6 of the present disclosure is that in the press-in method according to aspect 4, in the position measurement step, the measurement management device measures positions of two points in a lower portion of the pile, and in the top end height measurement step, the measurement management device measures a position of a target attached above the pile.

Aspect 7 of the present disclosure is that the press-in method according to any one of aspects 1 to 6 further includes: an overrun amount acquisition step of acquiring a turning overrun amount of the mast in a turning operation and a linear motion overrun amount of the mast in a linear motion operation, wherein in the positioning step, the turning operation and the linear motion operation of the mast are performed by using a result obtained by subtracting the turning overrun amount from a turning amount of the mast calculated based on the first position information and the second position information, and a result obtained by subtracting the linear motion overrun amount from a linear motion amount of the mast calculated based on the first position information and the second position information.

Aspect 8 of the present disclosure is that in the press-in method according to any one of aspect 1 to aspect 7, the plurality of clamps include a first clamp that is located at a frontmost side, a second clamp that is adjacent to the first clamp, and a third clamp that is adjacent to the second clamp, and after the pile is pressed into the ground by a predetermined amount in the press-in step, the first clamp is moved to a first existing pile adjacent to the pile based on position information of the first existing pile stored when the press-in machine presses in the first existing pile, the second clamp is moved to a second existing pile adjacent to the first existing pile based on position information of the first clamp stored when the first clamp holds the second existing pile, and the third clamp is moved to a third existing pile adjacent to the second existing pile based on position information of the second clamp stored when the second clamp holds the third existing pile.

A press-in system according to aspect 9 of the present disclosure includes: a press-in machine; and a measurement management device disposed apart from the press-in machine and configured to perform communication with the press-in machine, wherein the press-in machine includes a chuck configured to grip a pile, a saddle to which a plurality of clamps configured to hold an existing pile to obtain a reaction force from the existing pile are attached, a turnable mast configured to move back and forth with respect to the saddle and supporting the chuck, a sensor configured to detect a position of the chuck, and a control unit configured to control operations of the chuck, the mast, and the saddle, the measurement management device is configured to measure a position of the pile gripped by the chuck to acquire first position information of the pile in an objective coordinate system, the sensor is configured to detect the position of the chuck to acquire second position information of the pile in a subjective coordinate system that is based on an advancing direction of the saddle, the control unit or the measurement management device is configured to generate a command related to an operation of the press-in machine for moving the pile to a target position by using the first position information and the second position information, the press-in machine is configured to operate based on the command, to move the pile gripped by the chuck to the target position, and to press the pile into a ground, the press-in machine and the measurement management device are configured to perform communication of at least the first position information, and an origin of the subjective coordinate system is a turning central axis of the mast at the time the mast is located farthest backward with respect to the saddle.

A program according to aspect 10 of the present disclosure causes a computer, the computer being included in a press-in system provided with a press-in machine and a measurement management device, the press-in machine including a chuck configured to grip a pile, a saddle to which a plurality of clamps configured to hold an existing pile to obtain a reaction force from the existing pile are attached, and a turnable mast configured to move back and forth with respect to the saddle and supporting the chuck, to execute: a process of measuring a position of the pile gripped by the chuck in an objective coordinate system by the measurement management device; a process of causing the measurement management device and the press-in machine to perform communication of at least first position information of the pile in the objective coordinate system; a process of generating a command related to an operation of the press-in machine for moving the pile to a target position by using the first position information and second position information on a position of the chuck in a subjective coordinate system that is based on an advancing direction of the saddle and whose origin is a turning central axis of the mast at the time the mast is located farthest backward with respect to the saddle; a process of operating the press-in machine based on the command to move the pile gripped by the chuck to the target position; and a process of pressing the pile into a ground at a position of the pile after movement.

### Advantageous Effects of Invention

According to the press-in method, the press-in system, and the program of the above aspects of the present disclosure, it is possible to realize automation of moving a pile to a target position.

### BRIEF DESCRIPTION OF DRAWINGS

[FIG. 1] A schematic view of a press-in system according to the present embodiment.
[FIG. 2] A view showing a configuration of a press-in machine according to the present embodiment.
[FIG. 3] A view showing a state where a driving-down device is attached to a pile.
[FIG. 4] A view showing a press-in method according to the present embodiment.
[FIG. 5] A view showing steps subsequent to FIG. 4.
[FIG. 6] A view of the press-in machine when viewed from above, in which part (a) shows a subjective coordinate system and part (b) shows an objective coordinate system.
[FIG. 7] A view showing an operation of the press-in machine for converting position information in the objective coordinate system into that in the subjective coordinate system.
[FIG. 8] A flowchart showing a positioning step in the press-in method according to the present embodiment.
[FIG. 9] A flowchart showing a press-in step in the press-in method of the present embodiment.
[FIG. 10] A view showing an overrun amount.
[FIG. 11] A flowchart showing an overrun amount acquisition step in the press-in method of the present embodiment.

### DESCRIPTION OF EMBODIMENTS

Hereinafter, a press-in method, a press-in system, and a program of the present embodiment will be described with reference to the drawings.

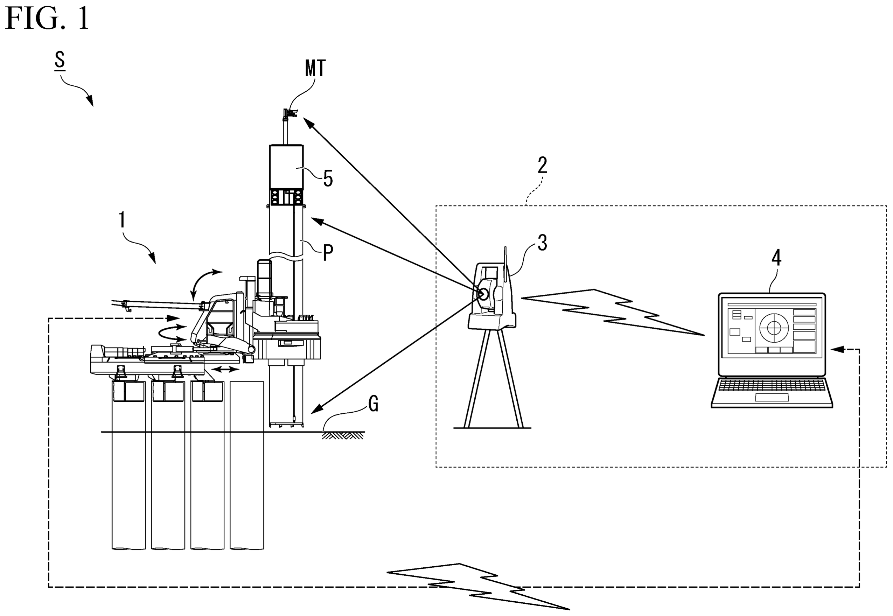

As shown in FIG. 1, a press-in system S of the present embodiment includes a press-in machine 1 (press-in and pull-out machine) and a measurement management device 2. The press-in machine 1 can press a pile into the ground and pull out the pile from the ground. However, the press-in machine 1 may not have a function of pulling out the pile from the ground.

In the present embodiment, the press-in machine 1 that performs press-in construction of a pile that can be held from an inner side thereof will be described as an example. Examples of the pile that can be held from an inner side thereof include a steel pipe pile, a steel pipe sheet pile, a concrete pile, and the like. In FIG. 1 and the like, the steel pipe pile is shown as an example of the pile. However, a type of a pile to be set as a target of the press-in construction is not limited to the steel pipe pile and is not particularly limited. A pile that can be held from an outer side thereof may be set as a target of the press-in construction.

The measurement management device 2 includes a measurement unit 3 and a management unit 4. The measurement unit 3 is, for example, a total station. The measurement unit 3 can measure a position of the pile. The management unit 4 is, for example, a notebook computer. The management unit 4 communicates with the measurement unit 3. In addition, the measurement management device 2 communicates with the press-in machine 1. Either one of the measurement unit 3 and the management unit 4 may communicate with the press-in machine 1, or both may communicate with the press-in machine 1. In the present specification, a specific method of the "communication" is not particularly limited, but wireless communication (for example, Bluetooth (registered trademark)) is suitable. The "communication" of the present embodiment may be performed by wired communication.

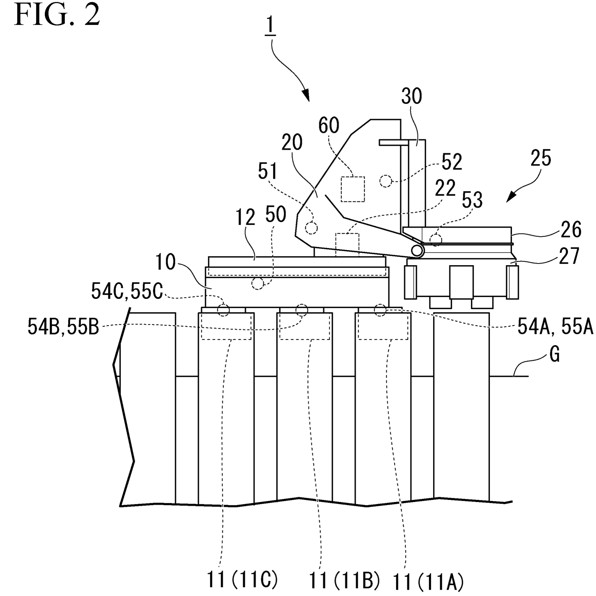

As shown in FIG. 2, the press-in machine 1 includes a mast 20, a slide frame 12, a saddle 10, a plurality of clamps 11, a chuck 25, a cylinder 30, a mast front and rear sensor 50, a mast turning sensor 51, a chuck up and down sensor 52, a chuck rotation sensor 53, a first clamp front and rear sensor 54A, a second clamp front and rear sensor 54B, a third clamp front and rear sensor 54C, a first clamp right and left sensor 55A, a second clamp right and left sensor 55B, a third clamp right and left sensor 55C, and a control unit 60.

### (Definition of Direction)

The term "front side" of the press-in machine in the present specification indicates a direction in which construction proceeds. In FIGS. 1, 2, 4, and the like, a right side is the front side of the press-in machine 1, and a left side is a rear side of the press-in machine 1. In the press-in machine 1 of the present embodiment, a side where the mast 20 is provided is referred to as an upper side, and a side where the saddle 10 is provided is referred to as a lower side. A direction orthogonal to both a front and rear direction and an up and down direction will be referred to as a right and left direction. An "advancing" direction of the press-in machine 1 may include a component in the right and left direction (direction orthogonal to a paper surface of FIG. 1). In addition, in the present specification, the phrase "advancing direction of the saddle 10" means a direction of a planned normal line in progressing the press-in construction. The up and down direction in the present embodiment may be parallel to the vertical direction (gravity direction) or may be inclined with respect to the vertical direction.

The plurality of clamps 11 are provided in a lower portion of the saddle 10. The number of the clamps 11 provided in the press-in machine 1 may be any number of 2 or more. The plurality of clamps 11 are disposed at intervals in the front and rear direction. The clamps 11 hold upper end portions of piles already pressed into the ground G, thereby fixing the saddle 10 to the piles (ground G). Hereinafter, an already installed pile (a pile already pressed into the ground G) may be referred to as an "existing pile". The clamp 11 of the present embodiment is inserted into the existing pile, expands in diameter, and is pressed against an inner surface of the existing pile, thereby holding the existing pile from an inner side thereof. However, the structure of the clamp 11 for holding the existing pile is not particularly limited.

In the present specification, the plurality of clamps 11 may be referred to as a first clamp 11A, a second clamp 11B, and a third clamp 11C from the front to the rear in a movement direction of the press-in machine 1 (from the right to the left in FIG. 1). The first clamp 11A is a clamp 11 that is located on a frontmost side among the plurality of clamps 11. The second clamp 11B is adjacent to a rear side of the first clamp 11A. The third clamp 11C is adjacent to a rear side of the second clamp 11B. FIG. 2 shows a state where the saddle 10 is fixed by holding upper end portions of three existing piles by the clamps 11A to 11C, and one new pile is completely pressed-in in front of the three existing piles.

The plurality of clamps 11 can move in any direction along a horizontal plane with respect to the saddle 10. For example, the clamps 11 can move in the front and rear direction with respect to the saddle 10, and can move in the right and left direction with respect thereto. The clamps 11 can also move in a direction in which the front and rear direction and the right and left direction are combined. In the press-in machine 1 of the present embodiment, the plurality of clamps 11 can operate (move) independently of each other. However, some of the plurality of clamps 11 may be fixed to the saddle 10.

The slide frame 12 is provided on an upper portion of the saddle 10 to be relatively slidable in the front and rear direction with respect to the saddle 10. Therefore, the saddle 10 is slidable in the front and rear direction with respect to the slide frame 12 and the mast 20. In a state where the clamps 11 grip the existing piles and positions of the clamps 11 with respect to the saddle 10 are fixed, when the saddle 10 is slid and moved, the mast 20 and the chuck 25 can be moved relative to the existing piles. Moving the mast 20 and the chuck 25 in this way is referred to as "linear motion" below.

The mast 20 is provided on the top of the slide frame 12. The mast 20 can turn with respect to the slide frame 12 around a rotation shaft 22 provided in a central portion of the slide frame 12. A turning operation of the mast 20 is performed by, for example, a rotational drive source (not shown) such as a motor provided below the mast 20.

The chuck 25 is provided in front of the mast 20. The chuck 25 can be raised and lowered with respect to the mast 20 by an extension and contraction operation of the cylinder 30. The chuck 25 includes a chuck frame 26 and a chuck grip portion 27. The chuck frame 26 can be raised and lowered with respect to the mast 20, and the chuck grip portion 27 is mounted on the chuck frame 26. The chuck grip portion 27 of the present embodiment can grip a pile from an outer side thereof.

The chuck grip portion 27 is rotatably mounted on the chuck frame 26. The chuck grip portion 27 is rotatable around an axis extending in the up and down direction. Accordingly, the chuck 25 can rotate with respect to the mast 20. The pile can be rotationally pressed into the ground by lowering the chuck 25 by the operation of the cylinder 30 while the chuck 25 grips and rotates the pile. However, the press-in machine 1 may press in the pile without rotating the pile.

The mast front and rear sensor 50 is disposed in the vicinity of a boundary between the saddle 10 and the slide frame 12. The mast front and rear sensor 50 detects a relative positional relationship between the saddle 10 and the mast 20. The mast front and rear sensor 50 can detect a movement amount in the front and rear direction of the mast 20 and a movement direction thereof in correspondence with sliding of the slide frame 12. The mast turning sensor 51 is provided inside the mast 20 and detects a turning angle of the mast 20 around the rotation shaft 22. The mast front and rear sensor 50, the mast turning sensor 51, and the like can indirectly detect a position of the chuck 25 or a position of a pile P (refer to FIG. 1) gripped by the chuck 25. The positions detected by these sensors are numerical values in a subjective coordinate system (details will be described later).

The chuck up and down sensor 52 is disposed in a front portion of the mast 20. The chuck up and down sensor 52 detects a relative positional relationship (up and down positional relationship) between the mast 20 and the chuck 25. The chuck up and down sensor 52 can detect an elevation amount (movement amount) of the chuck 25 in the up and down direction and an elevation direction thereof. The chuck rotation sensor 53 is disposed in the vicinity of the chuck frame 26 and detects a rotation angle of the chuck 25.

The first clamp front and rear sensor 54A is disposed in the vicinity of a boundary between the saddle 10 and the first clamp 11A. The first clamp front and rear sensor 54A detects a position of the first clamp 11A in the front and rear direction. The first clamp front and rear sensor 54A performs detection of a back and forth movement of the first clamp 11A and a holdable position associated with the movement. The first clamp right and left sensor 55A is disposed in the vicinity of the boundary between the saddle 10 and the first clamp 11A, and detects a position of the first clamp 11A in the right and left direction. The first clamp right and left sensor 55A performs detection of a right and left movement of the first clamp 11A and a holdable position associated with the movement.

The second clamp front and rear sensor 54B is disposed in the vicinity of a boundary between the saddle 10 and the second clamp 11B. The second clamp front and rear sensor 54B detects a position of the second clamp 11B in the front and rear direction. The second clamp front and rear sensor 54B performs detection of a back and forth movement of the second clamp 11B and a holdable position associated with the movement. The second clamp right and left sensor 55B is disposed in the vicinity of the boundary between the saddle 10 and the second clamp 11B, and detects a position of the second clamp 11B in the right and left direction. The second clamp right and left sensor 55B performs detection of a right and left movement of the second clamp 11B and a holdable position associated with the movement.

The third clamp front and rear sensor 54C is disposed in the vicinity of a boundary between the saddle 10 and the third clamp 11C. The third clamp front and rear sensor 54C detects a position of the third clamp 11C in the front and rear direction. The third clamp front and rear sensor 54C performs detection of a back and forth movement of the third clamp 11C and a holdable position associated with the movement. The third clamp right and left sensor 55C is disposed in the vicinity of the boundary between the saddle 10 and the third clamp 11C, and detects a position of the third clamp 11C in the right and left direction. The third clamp right and left sensor 55C performs detection of a right and left movement of the third clamp 11C and a holdable position associated with the movement.

For the mast front and rear sensor 50, the mast turning sensor 51, the chuck up and down sensor 52, the chuck rotation sensor 53, the clamp front and rear sensors 54A to 54C, and the clamp right and left sensors 55A to 55C, known sensors can be used. For example, a stroke sensor, a proximity switch, a limit switch, a pressure sensor, or the like can be appropriately selected and used.

The control unit 60 is provided inside the mast 20. The control unit 60 is electrically connected to the sensors 50 to 53, 54A to 54C, and 55A to 55C. The control unit 60 performs calculation based on communication results with the measurement management device 2, a detection result by each of the sensors 50 to 53, 54A to 54C, and 55A to 55C, and the like. Based on the calculation results, the control unit 60 controls an operation of each unit of the press-in machine 1.

As shown in FIG. 1, the measurement unit 3 can measure a position, an inclination, and a top end height (upper end height) of the pile P gripped by the chuck 25. Here, the position of the pile P measured by the measurement unit 3 is a position in an objective coordinate system. The objective coordinate system is a coordinate system in a case where the press-in machine 1 is objectively observed from the outside. Specific examples of the objective coordinate system include public coordinates (plane rectangular coordinate system), an international terrestrial reference frame (ITRF), a Japanese geodetic datum 2011, and a coordinate system based on these. On the other hand, a coordinate system in a case of being subjectively observed from the press-in machine 1 is referred to as a subjective coordinate system.

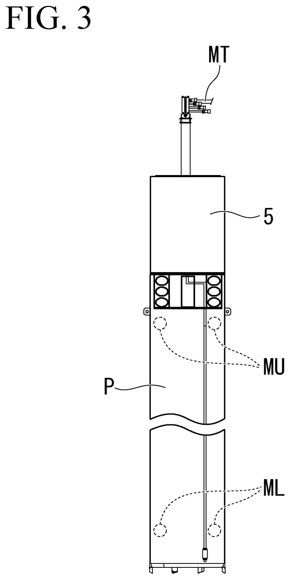

The measurement by the measurement unit 3 will be described with reference to FIG. 3. In a case where the measurement unit 3 measures the position of the pile P, specifically, positions of two measurement points (lower measurement points ML) located in a lower portion of the pile P are acquired. The lower measurement points ML are, for example, positions on a surface of the cylindrical pile P. The measurement unit 3 transmits information on the positions of the two lower measurement points ML to the management unit 4. The management unit 4 calculates the center position of the pile P in the objective coordinate system based on the information.

In a case where the measurement unit 3 measures the inclination of the pile P, positions of two measurement points (upper measurement points MU) located in an upper portion of the pile P are acquired in addition to the two lower measurement points ML. That is, in a case where the inclination is measured, the measurement unit 3 acquires the positions of a total of four points (two lower measurement points ML and two upper measurement points MU). The upper measurement points MU are, for example, positions on the surface of the cylindrical pile P. The measurement unit 3 transmits information on the positions of the four points to the management unit 4. The management unit 4 calculates the center position of the lower portion of the pile P based on the information on the two lower measurement points ML, and calculates the center position of the upper portion of the pile P based on the information on the two upper measurement points MU. In other words, the two lower measurement points ML are positions by which the center position of the lower portion of the pile P in a horizontal direction can be calculated, and the two upper measurement points MU are positions by which the center position of the upper portion of the pile P in the horizontal direction can be calculated. Then, the management unit 4 calculates the inclination of the pile P based on the center position of the upper portion and the center position of the lower portion of the pile P. The pile P enters the ground G as the press-in construction progresses. Therefore, the positions of the lower measurement points ML shift upward with the passage of time. As an example of actual measurement, the lower measurement points ML may be set to positions below the chuck 25 and above the ground or a water surface, and the upper measurement points MU may be set to positions above the chuck 25.

As shown in FIG. 3, a driving-down device 5 may be attached to the upper end of the pile P. In addition, a target MT such as a prism for measurement may be attached to the driving-down device 5. In a case where the measurement unit 3 measures the top end height of the pile P, a position of the target MT is acquired. The measurement unit 3 transmits information on the position of the target MT to the management unit 4. The management unit 4 performs calculation based on the information to generate top end height information. For example, the top end height information is obtained by subtracting a distance between the top end of the pile P and the target MT from a measured height position of the target MT. The target MT may be directly attached to the pile P. Alternatively, the target MT may be indirectly attached to the pile P through a member that is not the driving-down device. That is, as long as the target MT is indirectly or directly attached above the pile P, the top end height of the pile P can be measured.

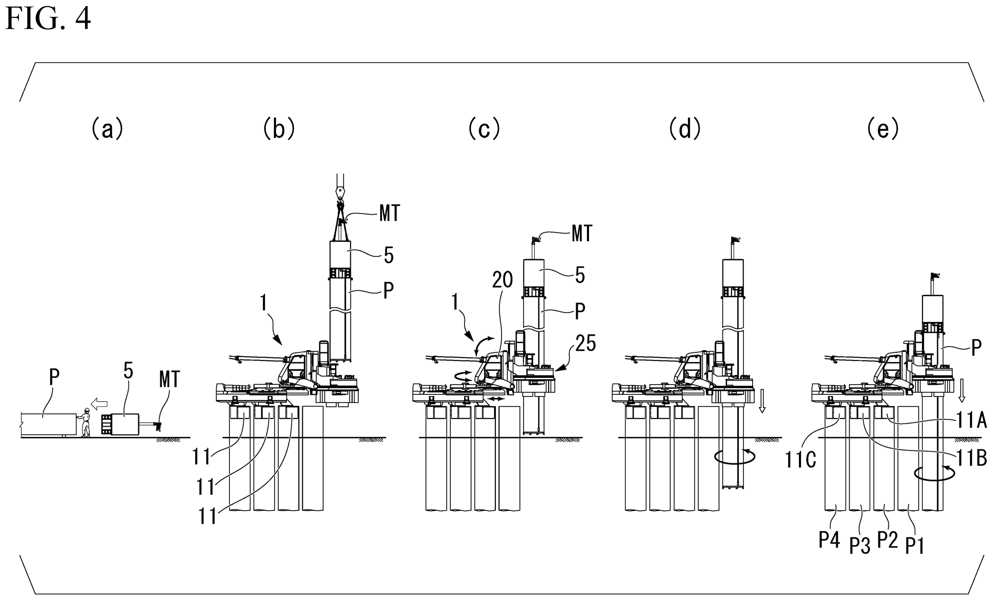

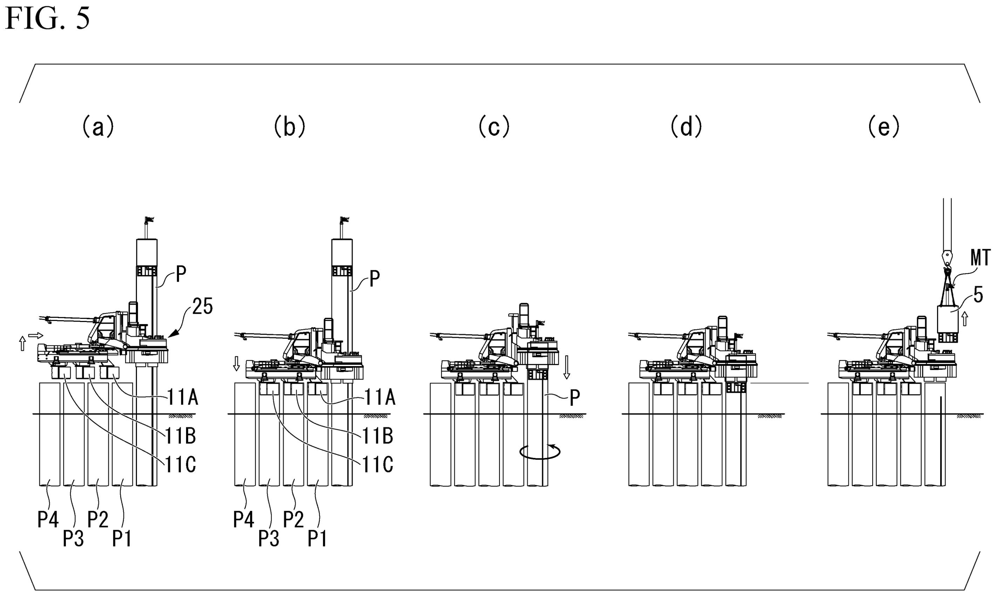

Next, an outline of the press-in method according to the present embodiment will be described with reference to FIGS. 4 and 5.

First, as shown in part (a) of FIG. 4, the driving-down device 5 including the target MT is attached to the upper end of the pile P.

Next, as shown in part (b) of FIG. 4, the chuck 25 grips the pile P in a state where a plurality of existing piles are held by the clamps 11 (gripping step). As a specific example, the pile P may be suspended by a crane or the like and may be lowered from above the chuck 25 to an inner side of the chuck 25. Since steps before bringing the existing piles into a state of being held by the clamps 11 are similar to the related art, description thereof will be omitted. In part (b) of FIG. 4, another existing pile is disposed in front of three existing piles held by three clamps 11.

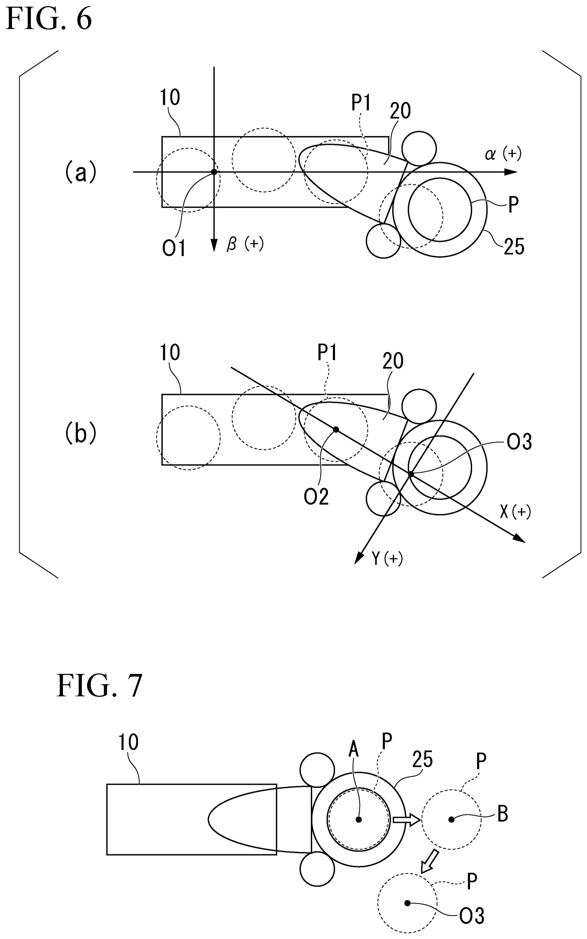

Next, as shown in part (c) of FIG. 4, the position of the pile P gripped by the chuck 25 is moved to a target position O3 (refer to FIGS. 6 and 7) by linearly moving or turning the mast 20 (positioning step). The target position O3 is a design coordinate on a construction plan of the pile P that is a press-in target. Although details will be described later, in the present embodiment, automation of the positioning step is realized.

Next, as shown in part (d) of FIG. 4, the pile P gripped by the chuck 25 is pressed into the ground (press-in step). In the present embodiment, the pile P is pressed in while being rotated, but the pile P may be pressed in without being rotated. When the position of the chuck 25 reaches a lower limit, so-called "re-gripping" is performed. That is, the gripping of the pile P by the chuck 25 is released, the chuck 25 is moved upward as shown in part (e) of FIG. 4, thereafter the pile P is re-gripped by the chuck 25, and the press-in is continued.

As the press-in is continued, a support force of the pile P by the ground increases. After the support force of the pile P that can support the self-weight of the press-in machine 1 is obtained, as shown in part (a) of FIG. 5, holding the existing piles by the clamps 11 is released, and the press-in machine 1 is raised. Specifically, the chuck 25 is lowered with respect to the mast 20 in a state where the pile P is gripped by the chuck 25. As a result, the mast 20 and the like rise, and the clamps 11 are separated upward from the existing piles.

Next, as shown in part (b) of FIG. 5, after the saddle 10 is advanced, the press-in machine 1 is lowered. At this time, each of the clamps 11 holds an existing pile adjacent to the front of the existing pile held by each clamp 11 that is shown in part (e) of FIG. 4. In the present embodiment, the automation of the steps shown in part (e) of FIG. 4, and parts (a) and (b) of FIG. 5 (that is, the self-propelling of the press-in machine 1) is realized.

Here, the self-propelling of the press-in machine 1 will be described. In part (e) of FIG. 4, a pressed-in pile adjacent to the pile P during the press-in is referred to as a first existing pile P1. In addition, pressed-in piles held by the first clamps 11A, 11B, and 11C are referred to as a second existing pile P2, a third existing pile P3, and a fourth existing pile P4, respectively. The first existing pile P1 is a pile that is pressed in by the press-in machine 1 before the steps shown in FIG. 4. Therefore, the press-in machine 1 stores information on a position of the first existing pile P1. In addition, the press-in machine 1 also stores information on positions of the first clamp 11A, the second clamp 11B, and the third clamp 11C in part (e) of FIG. 4. These pieces of information are stored in, for example, a memory (storage region) provided in the control unit 60. These pieces of information are generated based on a detection result by each of the sensors 50 to 53, 54A to 54C, and 55A to 55C provided in the press-in machine 1.

When performing the self-propelling, the first clamp 11A moves from the second existing pile P2 to the first existing pile P1. At this time, the information on the position of the first existing pile P1 stored in the press-in machine 1 is used. In addition, the second clamp 11B moves from the third existing pile P3 to the second existing pile P2. At this time, the information on the position of the first clamp 11A that holds the second existing pile P2, which is stored in the press-in machine 1, is used. Similarly, the third clamp 11C moves from the fourth existing pile P4 to the third existing pile P3. At this time, the information on the position of the second clamp 11B that holds the third existing pile P3, which is stored in the press-in machine 1, is used. Accordingly, the self-propelling can be performed.

Next, as shown in part (c) of FIG. 5, the press-in of the pile P by the chuck 25 is restarted. A step of measuring the top end height of the pile P (top end height measurement step) is performed as appropriate while the pile P is pressed in. In the top end height measurement step, the measurement unit 3 acquires the position of the target MT as described above, and the management unit 4 calculates the top end height based on the result. The calculation results may be transmitted to the press-in machine 1.

As shown in part (d) of FIG. 5, when the top end height of the pile P reaches a target value, the driving-down device 5 is removed as shown in part (e) of FIG. 5. As a result, the press-in construction of the pile P is completed. Thereafter, the pile P in which the press-in is completed may be used as an existing pile. By repeating the steps of FIGS. 4 and 5, press-in construction is sequentially performed for a plurality of piles.

Next, a method of automating the positioning step will be described. First, a difference between the subjective coordinate system and the objective coordinate system will be described. FIG. 6 is a view of the press-in machine 1 and the pile P when viewed from above, in which part (a) shows a subjective coordinate system and part (b) shows an objective coordinate system. As shown in part (a) of FIG. 6, the subjective coordinate system is a coordinate system based on a structure provided in the press-in machine 1. In the present embodiment, the subjective coordinate system is represented by α-β axes. The α axis coincides with a longitudinal direction of the saddle 10 (a direction in which the saddle 10 and the mast 20 move relative to each other). The β axis is orthogonal to the α axis in a plan view. The intersection (the origin O1 of the subjective coordinate system) of the α axis and the β axis is a position of a turning central axis (a central axis of a center pin) of the mast 20 at the time the mast 20 is most retracted with respect to the saddle 10.

As shown in part (b) of FIG. 6, the objective coordinate system is a coordinate system different from the subjective coordinate system. In the present embodiment, the objective coordinate system is represented by X-Y axes. In the example of part (b) of FIG. 6, the X axis is an axis connecting a center position O2 of a previously pressed-in pile (first existing pile P1) and the target position O3 in a construction plan for pressing in a subsequent pile P. The Y axis is orthogonal to the X axis in a plan view. Here, in order to operate the press-in machine 1, it is necessary to generate a command value in the subjective coordinate system. On the other hand, the target position O3 set by the measurement management device 2 is a value of the objective coordinate system. Therefore, in order to appropriately move the pile P gripped by the chuck 25 to the target position O3, the target position O3 is converted into a numerical value of the subjective coordinate system. This conversion is performed by a geometric calculation. In the present embodiment, the measurement management device 2 inputs the target position O3 and the like in the objective coordinate system to the control unit 60, and the control unit 60 performs calculation of converting the target position O3 into a numerical value of the subjective coordinate system.

Hereinafter, a specific method for positioning the pile P will be described. FIG. 7 is a view of the press-in machine 1 when viewed from above and is a schematic view showing an operation of the press-in machine 1 in the positioning step. In FIG. 7, a point A is the center position of the pile P gripped by the chuck 25 at the start of the positioning step. The press-in machine 1 advances the mast 20 to move the center of the pile P from the point A to a point B. Then, the press-in machine 1 moves the mast 20 (either one or both of linear motion and turning) to move the center of the pile P from the point B to the target position O3.

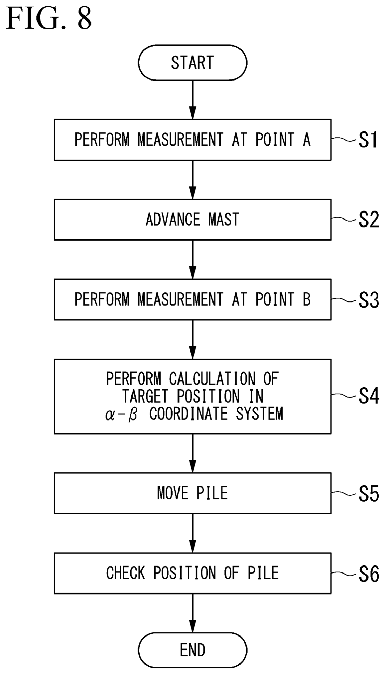

FIG. 8 is a flow for showing the positioning step and corresponds to FIG. 7.

As shown in FIG. 8, in the positioning step, first, measurement at the point A is performed in step S1. In step S1, the measurement management device 2 performs measurement of the point A in the objective coordinate system, and the press-in machine 1 performs measurement of the point A in the subjective coordinate system. The measurement in the subjective coordinate system is performed by the control unit 60 based on the detection results by the mast front and rear sensor 50, the mast turning sensor 51, and the like.

Next, in step S2, the mast 20 is advanced. The advancing distance is optional, and is, for example, 100 mm. In step S2, the mast 20 may be retracted instead of being advanced. In step S2, the position of the center of the pile P moves from the point A to the point B.

Next, in step S3, the measurement management device 2 performs measurement of the point B in the objective coordinate system, and the press-in machine 1 performs measurement of the point B in the subjective coordinate system. Next, in step S4, calculation of converting the target position O3 into a value of the α-β coordinate system (subjective coordinate system) is performed. For this calculation, information on the positions of the points A and B in the objective coordinate system and information on the positions of the points A and B in the subjective coordinate system are used. **In** this way, when the information on the two points A and B different from the target position O3 is acquired in both the subjective coordinate system and the objective coordinate system, it is geometrically possible to convert the target position O3 from the objective coordinate system to the subjective coordinate system.

Next, in step S5, the pile P is moved to the target position O3 in the subjective coordinate system. Specifically, a command for operating the mast 20 of the press-in machine 1 is generated, and the mast 20 is operated in accordance with the command. The operation of the mast 20 includes either one or both of linear motion and turning. In the present embodiment, the control unit 60 generates a command for operating the mast 20. However, the measurement management device 2 may generate a command and input the command to the control unit 60 to operate the press-in machine 1.

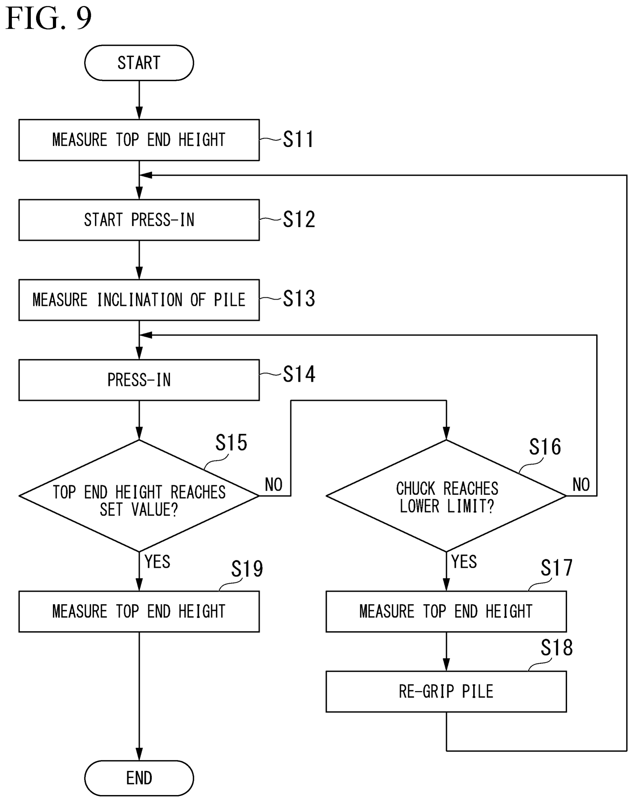

Next, in step S6, the position of the pile P gripped by the chuck 25 is checked. Specifically, the measurement management device 2 measures the position of the pile P and determines whether or not the position of the pile P matches the target position O3. In a case where the positions match each other, the positioning step is finished, and the process proceeds to the press-in step shown in FIG. 9. In a case where the positions do not match, the positioning step may be performed again.

Next, the press-in step will be described with reference to FIG. 9.

First, in step S11, measurement of the top end height is performed. Specifically, the measurement management device 2 measures the position of the target MT, and the top end height of the pile P is calculated based on the result.

Next, the press-in is started in step S12. Specifically, the chuck 25 is lowered by the extension and contraction operation of the cylinder 30. After the press-in is started, an inclination measurement step of the pile in step S13 is performed at a predetermined interval. The inclination of the pile is calculated based on the results of measuring four points (two lower measurement points ML and two upper measurement points MU) by the measurement management device 2. As a result of the inclination measurement step, in a case where the pile P is inclined by more than a predetermined amount with respect to a management angle, an inclination correction step of correcting the inclination of the pile P is performed. In the construction plan, the pile P may be pressed-in in a state of being intentionally inclined with respect to the vertical direction. That is, the management angle when the pile P is pressed in may be parallel to the vertical direction or may be inclined with respect to the vertical direction.

After step S13, in step S14, the press-in is continued. Next, in step S15, it is determined whether or not an estimated value of the top end height has reached a set value. The estimated value of the top end height is obtained by subtracting the press-in amount (lowering amount) of the pile P from the top end height information that is the measurement result in step S11. In a case where the estimated value of the top end height does not reach the set value (S15: NO), it is determined in Step S16 whether or not the chuck 25 has reached a lower limit. In a case where the chuck 25 does not reach the lower limit (S16: NO), the process returns to step S14. In a case where the chuck 25 has reached the lower limit (S16: YES), the top end height is measured in step S17, and the pile is re-gripped in step S18. In step S15, in a case where the estimated value of the top end height has reached the set value (S15: YES), the top end height is measured in step S19, and the press-in is completed.

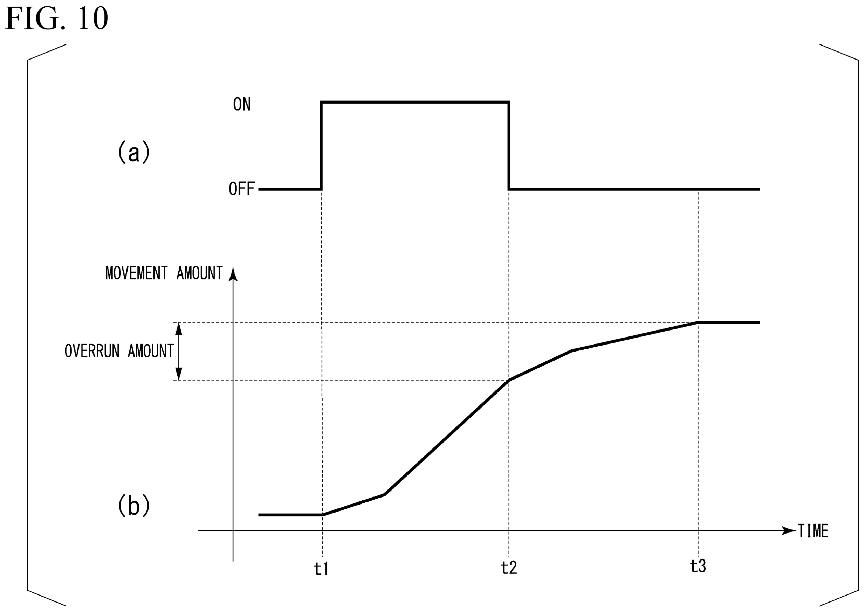

Next, a method of further improving accuracy of the operation of the mast 20 will be described. As described above, the mast 20 can turn around the rotation shaft 22. In addition, the mast 20 can move linearly by moving the slide frame 12 with respect to the saddle 10. FIG. 10 shows a relationship between a signal for operating the mast 20 and an actual operation of the mast 20. In FIG. 10, part (a) shows the signal and part (b) shows the operation. The vertical axis of part (b) of FIG. 10 represents a movement amount, and the horizontal axis thereof represents time. The term "operation" here may be turning or linear motion.

As shown in FIG. 10, a signal for operating the mast 20 is changed from OFF to ON at time t1, and thus the operation of the mast 20 is started. At time t2, the signal for operating the mast 20 is switched from ON to OFF, but the movement amount thereof increases up to time t3 due to an influence of inertia or the like of the mast 20. That is, the movement amount from the time t2 to the time t3 is an "overrun amount" that is not originally scheduled. The overrun amount is generated, for example, when an actuator (hydraulic, electric, or the like) is driven. By operating the mast 20 in consideration of the overrun amount, the accuracy of the operation can be improved. In the present embodiment, in order to perform the press-in construction of the pile P with high accuracy, the overrun amount is controlled in a millimeter unit.

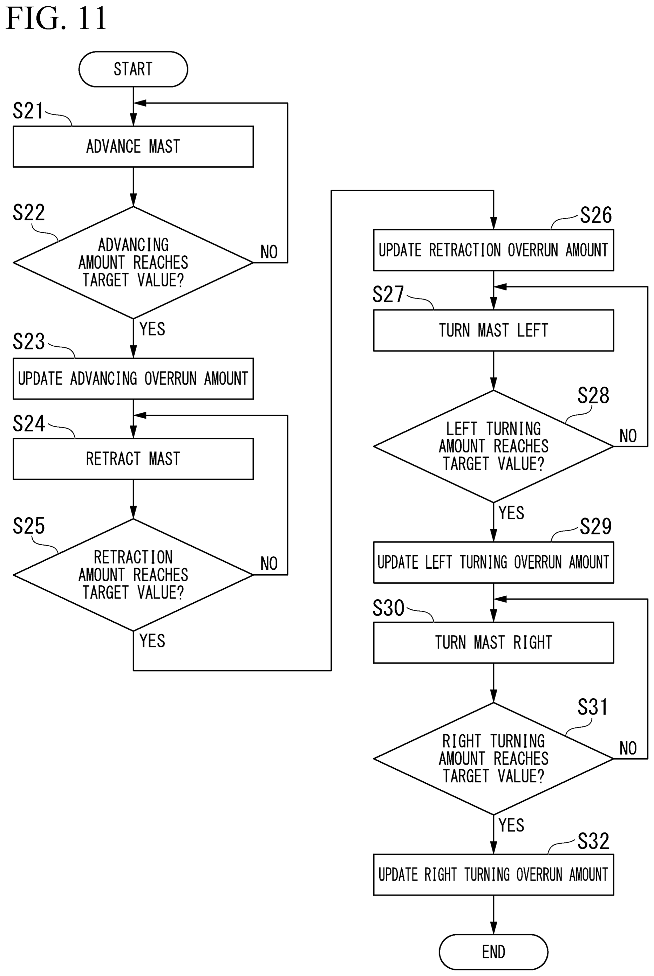

Therefore, in the present embodiment, various overrun amounts are grasped by the flow shown in FIG. 11.

Specifically, in step S21, the mast 20 is advanced. In step S22, it is determined whether or not an advancing amount instructed to the mast 20 has reached a target value. In a case where the advancing amount does not reach the target value, the process returns to step S21. In a case where the advancing amount has reached the target value, a difference between an actual advancing amount of the mast 20 measured by the mast front and rear sensor 50 and the advancing amount instructed to the mast 20 is calculated. A value stored in the memory provided in the control unit 60 is updated by using the difference as an "advancing overrun amount".

Hereinafter, for each operation of retraction, left turning, and right turning of the mast 20, the overrun amount is updated in a similar manner. That is, when the mast 20 is retracted (step S24) and a retraction amount instructed to the mast 20 has reached a target value (step S25: YES), a value stored in the memory provided in the control unit 60 is updated by using a difference between an actual retraction amount of the mast 20 measured by the mast front and rear sensor 50 and the retraction amount instructed to the mast 20 as a "retraction overrun amount".

In addition, when the mast 20 is turned left (step S27) and a left turning amount instructed to the mast 20 has reached a target value (step S28: YES), a value stored in the memory provided in the control unit 60 is updated by using a difference between an actual left turning amount of the mast 20 measured by the mast turning sensor 51 and the left turning amount instructed to the mast 20 as a "left turning overrun amount".

In addition, when the mast 20 is turned right (step S30) and a right turning amount instructed to the mast 20 has reached a target value (step S31: YES), a value stored in the memory provided in the control unit 60 is updated by using a difference between an actual right turning amount of the mast 20 measured by the mast turning sensor 51 and the right turning amount instructed to the mast 20 as a "right turning overrun amount".

The various overrun amounts obtained as described above are subtracted from movement amounts to be instructed to the mast 20 in the subsequent operation. Accordingly, it is possible to operate the mast 20 with high accuracy.

The functions of the control unit 60 and the measurement management device 2 described above are realized by, for example, a hardware processor such as a central processing unit (CPU) executing a program (software). In addition, some or all of the functions of the control unit 60 and the like may be realized by hardware such as large scale integration (LSI) and application specific integrated circuit (ASIC), or may be realized by cooperation between software and hardware. The program may be stored in a storage device (a storage device including a non-transitory storage medium) such as an HDD or a flash memory of the control unit 60 or the like in advance or may be stored in a removable storage medium such as a DVD or a CD-ROM, and the storage medium (the non-transitory storage medium) may be mounted on a drive device to be installed in the HDD or the flash memory of the control unit 60 and the measurement management device 2.

As described above, the press-in method of the present embodiment includes a gripping step of gripping the pile P by the chuck 25 of the press-in machine 1, a position measurement step of measuring a position of the pile P gripped by the chuck 25 in an objective coordinate system by the measurement management device 2 disposed apart from the press-in machine 1, a communication step of causing the measurement management device 2 and the press-in machine 1 to communicate with each other, a command generation step of generating a command related to an operation of the press-in machine 1 for moving the pile P to the target position O3 by using first position information (position information of points A and B) of the pile P in the objective coordinate system, which is measured in the position measurement step, and second position information (position information of points A and B) on a position of the chuck 25 in a subjective coordinate system that is based on an advancing direction of the saddle 10 of the press-in machine 1, a positioning step of causing the press-in machine 1 to operate based on the command to move the pile P gripped by the chuck 25 to the target position O3, and a press-in step of pressing the pile P into the ground G at a position of the pile P after the positioning step, in which communication of at least the first position information is performed in the communication step, and an origin of the subjective coordinate system is a turning central axis of the mast 20 at the time the mast 20 supporting the chuck 25 is located farthest backward with respect to the saddle 10.

In addition, the press-in system S of the present embodiment includes the press-in machine 1, and the measurement management device 2 that is disposed apart from the press-in machine 1 and is configured to perform communication with the press-in machine 1, in which the press-in machine 1 includes the chuck 25 configured to grip the pile P, the saddle 10 to which the plurality of clamps 11 configured to hold an existing pile to obtain a reaction force from the existing pile are attached, the turnable mast 20 configured to move back and forth with respect to the saddle 10 and supporting the chuck 25, a sensor (mast front and rear sensor 50, mast turning sensor 51, and the like) configured to detect a position of the chuck 25, and the control unit 60 configured to control operations of the chuck 25, the mast 20, and the saddle 10, the measurement management device 2 measures a position of the pile P gripped by the chuck 25 to acquire first position information of the pile P in an objective coordinate system, the sensor detects the position of the chuck 25 to acquire second position information of the pile P in a subjective coordinate system that is based on an advancing direction of the saddle 10, the control unit 60 or the measurement management device 2 generates a command related to an operation of the press-in machine 1 for moving the pile P to the target position O3 by using the first position information and the second position information, the press-in machine 1 operates based on the command, moves the pile P gripped by the chuck 25 to the target position O3 and presses the pile P into the ground G, the press-in machine 1 and the measurement management device 2 perform communication of at least the first position information, and an origin of the subjective coordinate system is a turning central axis of the mast 20 at the time the mast 20 is located farthest backward with respect to the saddle 10.

In addition, the program of the present embodiment causes a computer that is included in the press-in system S provided with the press-in machine 1 and the measurement management device 2, to execute: a process of measuring a position of the pile P gripped by the chuck 25 in an objective coordinate system by the measurement management device 2; a process of causing the measurement management device 2 and the press-in machine 1 to perform communication of at least first position information of the pile P in the objective coordinate system; a process of generating a command related to an operation of the press-in machine 1 for moving the pile P to the target position O3 by using the first position information and second position information on a position of the chuck 25 in a subjective coordinate system that is based on an advancing direction of the saddle 10 of the press-in machine 1 and whose origin is a turning central axis of the mast 20 at the time the mast 20 supporting the chuck 25 is located farthest backward with respect to the saddle 10; a process of operating the press-in machine 1 based on the command to move the pile P gripped by the chuck 25 to the target position O3; and a process of pressing the pile P into the ground G at a position of the pile P after the movement.

According to the press-in method, the press-in system, and the program, it is possible to realize automation of moving the pile P to a target position and pressing in the pile P.

In addition, in the communication step, the measurement management device 2 may transmit the first position information measured in the position measurement step to the press-in machine 1, and in the command generation step, the control unit 60 of the press-in machine 1 may generate the command by using the first position information and the second position information. In this way, by the press-in machine 1 taking the lead in generating the command, the amount of information to be communicated between the press-in machine 1 and the measurement management device 2 is reduced. Therefore, it is possible to speed up the process of generating the command.

In addition, the press-in method according to the present embodiment includes an inclination measurement step of measuring an inclination of the pile P gripped by the chuck 25 with respect to a management angle by the measurement management device 2, and an inclination correction step of correcting the inclination of the pile P by using inclination information of the pile P, which is measured in the inclination measurement step. As a result, the inclination of the pile P to be pressed in can be limited.

In addition, the press-in method of the present embodiment includes a top end height measurement step of measuring a top end height of the pile P gripped by the chuck 25 by the measurement management device 2, and in the press-in step, the pile P is pressed into the ground to a predetermined depth by using information on the top end height measured in the top end height measurement step.

In addition, in the position measurement step, the measurement management device 2 measures positions of two points ML in a lower portion of the pile P, in the inclination measurement step, the measurement management device 2 measures the positions of the two points ML in the lower portion of the pile P and positions of two points MU in an upper portion of the pile P, and in the top end height measurement step, the measurement management device 2 measures a position of the target MT attached above the pile P. In this way, it is possible to shorten time to be required for measurement by changing the number of measurement points according to the purpose of measurement.

In addition, the press-in method of the present embodiment further includes an overrun amount acquisition step of acquiring a turning overrun amount (at least either one of a right turning overrun amount or a left turning overrun amount) in a turning operation and a linear motion overrun amount (at least either one of a advancing overrun amount or a retraction overrun amount) in a linear motion operation of the mast 20 that supports the chuck 25, and in the positioning step, the turning operation and the linear motion operation of the mast 20 are performed by using a result obtained by subtracting the turning overrun amount from a turning amount of the mast 20, which is calculated based on the first position information and the second position information, and a result obtained by subtracting the linear motion overrun amount from a linear motion amount of the mast, which is calculated based on the first position information and the second position information. In this way, by operating the mast 20 in consideration of various overrun amounts, the positioning of the pile P can be performed with higher accuracy.

In addition, the press-in machine 1 includes the mast 20 that supports the chuck 25 and is turnable, the saddle 10 that is movable back and forth with respect to the mast 20, and the plurality of clamps 11 that are movably attached to the saddle 10 and hold an existing pile from an inner side thereof, and the plurality of clamps 11 include a first clamp 11A that is located at a frontmost side, a second clamp 11B that is adjacent to the first clamp 11A, and a third clamp 11C that is adjacent to the second clamp 11B, after the pile P is pressed into the ground G by a predetermined amount in the press-in step, the first clamp 11A is moved to a first existing pile P1 adjacent to the pile P based on position information of the first existing pile P1, which is stored when the press-in machine 1 presses in the first existing pile P1, the second clamp 11B is moved to a second existing pile P2 adjacent to the first existing pile P1 based on position information of the first clamp 11A, which is stored when the first clamp 11A holds the second existing pile P2, and the third clamp 11C is moved to a third existing pile P3 adjacent to the second existing pile P2 based on position information of the second clamp 11B, which is stored when the second clamp 11B holds the third existing pile P3. With such control, self-propelling of the press-in machine 1 can be realized. Note that the term "predetermined amount" described herein is a press-in amount with which the pile P can obtain a sufficient support reaction force from the ground G in order to cause the press-in machine 1 to self-propel, that is, to support the self-weight of the press-in machine 1 and the like.

The technical scope of the present disclosure is not limited to the embodiments described above, and various modifications can be made within the scope of the present disclosure.

For example, the measurement management device 2 of the above embodiment includes the measurement unit 3 and the management unit 4, each of which is independent, and the measurement unit 3 and the management unit 4 communicate with each other. However, the measurement unit 3 and the management unit 4 may be integrated into one device.

In addition, in the press-in system S of the above embodiment, the positioning of the pile P and the movement (self-propelling) of the press-in machine 1 are automated. However, the press-in machine 1 may not be made to self-propel, and only the positioning of the pile P may be automated.

In the above embodiment, the measurement management device 2 transmits the first position information of the pile P in the objective coordinate system to the press-in machine 1, and the control unit 60 of the press-in machine 1 generates a command related to the operation of the press-in machine 1 for moving the pile P to the target position O3 by using the first position information received from the measurement management device 2 and the second position information of the pile P in the subjective coordinate system, which is acquired by the sensor (the mast front and rear sensor 50, the mast turning sensor 51, and the like).

On the other hand, in a case where the measurement management device 2 generates a command related to the operation of the press-in machine 1 for moving the pile P to the target position O3, for example, the command may be generated as follows.

First, the measurement management device 2 transmits the first position information of the pile P in the objective coordinate system to the press-in machine 1. By transmitting the first position information, the control unit 60 of the press-in machine 1 recognizes the target position O3 that is a movement target of the pile P, and then the control unit 60 transmits the second position information of the pile P in the subjective coordinate system acquired by the sensor to the measurement management device 2. The measurement management device 2 generates the command related to the operation of the press-in machine 1 for moving the pile P to the target position O3 by using the first position information and the second position information received from the press-in machine 1. The measurement management device 2 transmits the generated command to the control unit 60 of the press-in machine 1, and the press-in machine 1 moves the pile P to the target position O3 based on the received command.

In this case, since the measurement management device 2 generates a command related to the operation of the press-in machine 1 for moving the pile P to the target position O3, for example, in a case where the amount of command calculation is large, it is possible to reduce a burden on the calculation of the control unit 60 of the press-in machine 1. In addition, the control for the operation of the press-in machine 1 by the control unit 60 and the calculation of the command in the measurement management device 2 can be performed in parallel, and the press-in work of the pile can be carried out efficiently.

In addition, it is possible to appropriately replace the components in the above-described embodiments with known components within the scope of the present disclosure, and the above-described embodiments and modification examples may be appropriately combined.

### REFERENCE SIGNS LIST

1 Press-in machine
2 Measurement management device
10 Saddle
11 Clamp
11A First clamp
11B Second clamp
11C Third clamp
20 Mast
25 Chuck
50 to 53, 54A to 54C, 55A to 55C Sensor
60 Control unit
G Ground
O3 Target position
P Pile
P1 First existing pile
P2 Second existing pile
P3 Third existing pile
S Press-in system

## Claims

1. A press-in method using a press-in machine including a chuck configured to grip a pile, a saddle to which a plurality of clamps configured to hold an existing pile to obtain a reaction force from the existing pile are attached, and a turnable mast configured to move back and forth with respect to the saddle and supporting the chuck, the press-in method comprising:
a gripping step of gripping the pile by the chuck;
a position measurement step of measuring a position of the pile gripped by the chuck in an objective coordinate system by a measurement management device disposed apart from the press-in machine;
a communication step of causing the measurement management device and the press-in machine to communicate with each other;
a command generation step of generating a command related to an operation of the press-in machine for moving the pile to a target position by using first position information of the pile in the objective coordinate system measured in the position measurement step and second position information on a position of the chuck in a subjective coordinate system that is based on an advancing direction of the saddle;
a positioning step of causing the press-in machine to operate based on the command to move the pile gripped by the chuck to the target position; and
a press-in step of pressing the pile into a ground at a position of the pile after the positioning step,
wherein in the communication step, communication of at least the first position information is performed, and
an origin of the subjective coordinate system is a turning central axis of the mast at the time the mast is located farthest backward with respect to the saddle.

2. The press-in method according to claim 1,
wherein in the communication step, the measurement management device transmits the first position information measured in the position measurement step to the press-in machine, and
in the command generation step, a control unit of the press-in machine generates the command by using the first position information and the second position information.

3. The press-in method according to claim 1, further comprising:
an inclination measurement step of measuring an inclination of the pile gripped by the chuck with respect to a management angle by the measurement management device; and
an inclination correction step of correcting the inclination of the pile by using inclination information of the pile measured in the inclination measurement step.

4. The press-in method according to claim 1, further comprising:
a top end height measurement step of measuring a top end height of the pile gripped by the chuck by the measurement management device,
wherein in the press-in step, the pile is pressed into the ground to a predetermined depth by using information on the top end height measured in the top end height measurement step.

5. The press-in method according to claim 3,
wherein in the position measurement step, the measurement management device measures positions of two points in a lower portion of the pile, and
in the inclination measurement step, the measurement management device measures the positions of the two points in the lower portion of the pile and positions of two points in an upper portion of the pile.

6. The press-in method according to claim 4,
wherein in the position measurement step, the measurement management device measures positions of two points in a lower portion of the pile, and
in the top end height measurement step, the measurement management device measures a position of a target attached above the pile.

7. The press-in method according to claim 1 or 2, further comprising:
an overrun amount acquisition step of acquiring a turning overrun amount of the mast in a turning operation and a linear motion overrun amount of the mast in a linear motion operation,
wherein in the positioning step, the turning operation and the linear motion operation of the mast are performed by using a result obtained by subtracting the turning overrun amount from a turning amount of the mast calculated based on the first position information and the second position information, and a result obtained by subtracting the linear motion overrun amount from a linear motion amount of the mast calculated based on the first position information and the second position information.

8. The press-in method according to claim 1,
wherein the plurality of clamps include a first clamp that is located at a frontmost side, a second clamp that is adjacent to the first clamp, and a third clamp that is adjacent to the second clamp, and
after the pile is pressed into the ground by a predetermined amount in the press-in step, the first clamp is moved to a first existing pile adjacent to the pile based on position information of the first existing pile stored when the press-in machine presses in the first existing pile, the second clamp is moved to a second existing pile adjacent to the first existing pile based on position information of the first clamp stored when the first clamp holds the second existing pile, and the third clamp is moved to a third existing pile adjacent to the second existing pile based on position information of the second clamp stored when the second clamp holds the third existing pile.

9. A press-in system comprising:
a press-in machine; and
a measurement management device disposed apart from the press-in machine and configured to perform communication with the press-in machine,
wherein the press-in machine includes
a chuck configured to grip a pile,
a saddle to which a plurality of clamps configured to hold an existing pile to obtain a reaction force from the existing pile are attached,
a turnable mast configured to move back and forth with respect to the saddle and supporting the chuck,
a sensor configured to detect a position of the chuck, and
a control unit configured to control operations of the chuck, the mast, and the saddle,
the measurement management device is configured to measure a position of the pile gripped by the chuck to acquire first position information of the pile in an objective coordinate system,
the sensor is configured to detect the position of the chuck to acquire second position information of the pile in a subjective coordinate system that is based on an advancing direction of the saddle,
the control unit or the measurement management device is configured to generate a command related to an operation of the press-in machine for moving the pile to a target position by using the first position information and the second position information,
the press-in machine is configured to operate based on the command, to move the pile gripped by the chuck to the target position, and to press the pile into a ground,
the press-in machine and the measurement management device are configured to perform communication of at least the first position information, and
an origin of the subjective coordinate system is a turning central axis of the mast at the time the mast is located farthest backward with respect to the saddle.

10. A program causing a computer, the computer being included in a press-in system provided with a press-in machine and a measurement management device, the press-in machine including a chuck configured to grip a pile, a saddle to which a plurality of clamps configured to hold an existing pile to obtain a reaction force from the existing pile are attached, and a turnable mast configured to move back and forth with respect to the saddle and supporting the chuck, to execute:
a process of measuring a position of the pile gripped by the chuck in an objective coordinate system by the measurement management device;
a process of causing the measurement management device and the press-in machine to perform communication of at least first position information of the pile in the objective coordinate system;
a process of generating a command related to an operation of the press-in machine for moving the pile to a target position by using the first position information and second position information on a position of the chuck in a subjective coordinate system that is based on an advancing direction of the saddle and whose origin is a turning central axis of the mast at the time the mast is located farthest backward with respect to the saddle;
a process of operating the press-in machine based on the command to move the pile gripped by the chuck to the target position; and
a process of pressing the pile into a ground at a position of the pile after movement.
